# EUROPÄISCHE PATENTSCHRIFT

(11) **EP 2 761 984 B1**
(45) Veröffentlichungstag und Bekanntmachung des Hinweises auf die Patenterteilung: **27.09.2017**
(21) Anmeldenummer: 13196037.9
(22) Anmeldetag: 06.12.2013
(51) Int. Cl.: A01D 41/127, A01D 75/18

(54) **Schwingungsaufnehmereinheit**
Vibration pick-up unit
Capteur d'oscillations

(30) Priorität: 31.01.2013 DE 102013201618
(43) Veröffentlichungstag der Anmeldung: 06.08.2014
(73) Patentinhaber: Deere & Company, Moline, IL 61265 (US)
(72) Erfinder: Bischoff, Lutz, 66989 Nuenschweiler (DE)
(74) Vertreter: Holst, Sönke

(56) Entgegenhaltungen:
- EP-A1- 1 839 478
- DE-A1-102009 000 351
- US-A1- 2002 107 624

## Beschreibung

Die Erfindung betrifft einen Mähdrescher nach dem Oberbegriff des Anspruchs 1.

### Stand der Technik

Landwirtschaftliche Mähdrescher werden bei der Ernte von Körnerfrüchten eingesetzt, um auf einem Feld angebaute Pflanzen zu ernten und zu dreschen. Das ausgedroschene Erntegut wird anschließend noch durch eine Trenneinrichtung bearbeitet. Das im Dresch- und Trennprozess gewonnene Korn wird anschließend in einer Reinigungseinrichtung gereinigt und in einem Korntank abgelegt, aus dem es schließlich auf ein Transportfahrzeug überladen wird. Zur optimalen Einstellung von Arbeitsparametern der Dresch- und Trenneinrichtung bzw. der Reinigungseinrichtung und/oder zur Vorgabe der Vortriebsgeschwindigkeit des Mähdreschers, die den Durchsatz bestimmt, verwendet man so genannte Verlustkornsensoren, die am Auslass der jeweiligen Einrichtung angeordnete Prallplatten mit Schwingungssensoren umfassen. Auf die Prallplatte aufprallende Körner erzeugen Schwingungen, die mit dem Schwingungssensor erfasst und durch eine Auswertungsschaltung ausgewertet werden. Die Signale der Auswertungsschaltung dienen zur Ansteuerung einer Verlustanzeige und/oder zur selbsttätigen Einstellung der Vortriebsgeschwindigkeit bzw. von Arbeitsparametern der Dresch- und/oder Trenneinrichtung und/oder der Reinigungseinrichtung.

Weiterhin umfasst ein Mähdrescher eine große Anzahl bewegter Teile, die selbst oder deren Lager durch Materialfehler, Verschleiß oder Überbeanspruchung beschädigt werden können. Es wurde vorgeschlagen, mögliche Fehler bewegter Teile einer Erntemaschine anhand der durch die Fehler verursachten Vibrationen mittels eines Schwingungssensors zu erfassen (DE 101 00 522 A1).

In der EP 1 839 478 A1 wird eine Körperschallsensoreinheit beschrieben, deren Vorverarbeitungselektronik für verschiedene Aufgaben umprogrammiert werden kann, u.a. zur Verwendung als Kornverlustsensor, als Vibrationssensor zur Überwachung eines Lagerspiels oder als Unwuchtmelder. Diese Körperschallsensoreinheit kann jedoch nur für einen Einsatzzweck zur Zeit programmiert werden. Um gleichzeitig Verlustkorn und Lagerschäden zu überwachen sind somit zwei Körperschallsensoreinheiten vonnöten.

Die DE 10 2009 000 351 A1 beschreibt eine Schwingungsaufnehmereinheit, in deren Gehäuse ein Schwingungsaufnehmer und eine digitale Signalverarbeitung zur Schadensüberwachung sowie eine analoge Signalverarbeitung zur Erkennung eines gegen eine Einzugswalze prallenden Fremdkörpers eingebaut sind.

Die US 2002/0107624 A1 beschreibt einen Mähdrescher, der mit mehreren Sensoren zur Erfassung des Zustands des Mähdreschers ausgestattet ist. Ein erster Sensor erfasst den Betriebszustand des Verbrennungsmotors, ein zweiter Sensor die Drehzahl einer Dreschtrommel und ein dritter Sensor die am Erntegutresteauslass eines Strohschüttlers abgegebenen Verlustkörner. Die Sensorwerte werden verarbeitet und im Falle eines erkannten Fehlers wird eine Nachricht drahtlos an eine beabstandete Stelle versandt.

### Aufgabe der Erfindung

Die der Erfindung zu Grunde liegende Aufgabe wird darin gesehen, den Aufwand für eine Erfassung von Verlustkörnern und eine Überwachung von bewegten Teilen eines Mähdreschers zu vermindern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher mit Vorrichtungen zum Fördern, Dreschen, Abscheiden und Reinigen von Erntegut umfasst eine der Erntegutresteabgabeseite der Vorrichtung zum Abscheiden oder Reinigen zugeordnete Schwingungsaufnehmereinheit, die einen Schwingungsaufnehmer und eine mit dem Schwingungsaufnehmer signalübertragend verbundene, elektronische Signalverarbeitungsschaltung aufweist. Im Betrieb leitet die Signalverarbeitungsschaltung aus den Signalen des Schwingungsaufnehmers Informationen hinsichtlich der Menge von durch den Schwingungsaufnehmer erfassten Verlustkörnern (insbesondere je Zeiteinheit) ab. Dieses Ergebnis gibt die Signalverarbeitungsschaltung als ersten Ausgangswert zur weiteren Verarbeitung und/oder Anzeige ab. Gleichzeitig untersucht die Signalverarbeitungsschaltung die Signale des Schwingungsaufnehmers, der über eine Halterung schwingungsleitend mit bewegten, zu überwachenden Teilen gekoppelt ist, auf Vibrationen, die auf mögliche Schäden an den bewegten Teilen hinweisen, und gibt das Ergebnis als zweiten Ausgangswert zur weiteren Verarbeitung und/oder Anzeige ab. Bei der Analyse der Signale der Schwingungsaufnehmer zur Bestimmung der Verluste und der Maschinendiagnose können beliebige Auswertungsverfahren zur Anwendung kommen.

Auf diese Weise erledigt eine einzige Schwingungsaufnehmereinheit gleichzeitig zwei Aufgaben, nämlich die Erfassung der Anzahl der Verlustkörner je Zeiteinheit und die Analyse erfasster Vibrationen auf mögliche Hinweise auf Schäden bewegter Teile. Dadurch wird der Aufwand für die Steuerung und Kontrolle des Mähdreschers vermindert.

Vorzugsweise sind der Schwingungsaufnehmer und die Signalverarbeitungsschaltung in einem gemeinsamen Gehäuse angeordnet. Es besteht jedoch auch die Möglichkeit, den Schwingungsaufnehmer räumlich getrennt von der Signalverarbeitungsschaltung anzubringen.

Der Schwingungsaufnehmer ist insbesondere schwingungsleitend mit einer Prallplatte oder einem Prallstab verbunden, die oder der in einen Verlustkörner enthaltenden Gutfluss einfügbar ist.

Ausführungsbeispiel
In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einer Schwingungsaufnehmereinheit, und
- Fig. 2: ein Schaltschema der Schwingungsaufnehmereinheit.

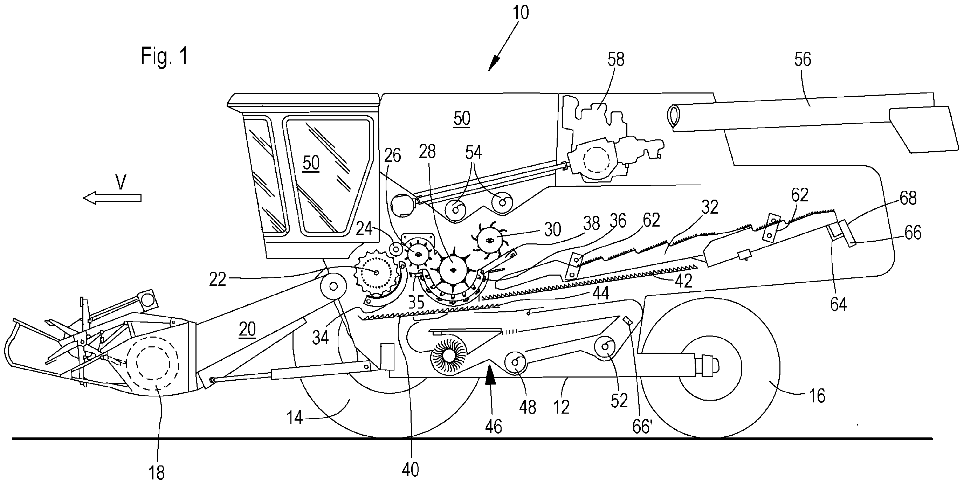

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.
An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.
Unterhalb des Mehrtrommeldreschwerks befindet sich ein vorderer Förderboden 40, der im Betrieb in eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn und Spreu nach hinten, während der hintere Förderboden 42 das durch den Strohschüttler 32 hindurch strömende Gemisch aus Korn und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.
Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Der Strohschüttler 32 ist durch angetriebene Kurbelwellen 62 am Rahmen 12 abgestützt.
Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.
An der Unterseite des rückwärtigen Endes eines der Strohschüttler 32 ist eine Halterung 64 befestigt, die eine Schwingungsaufnehmereinheit 66 haltert. Die Schwingungsaufnehmereinheit 66 umfasst eine rückwärtige, schräg nach oben geneigte Prallplatte 68, an der vom Strohschüttler 32 abgegebenes Stroh, das zu einem gewissen Teil auch Verlustkörner enthält, entlang strömt. Auf die Prallplatte 68 prallende Verlustkörner verursachen mechanische Schwingungen, die von der Schwingungsaufnehmereinheit 66 erfasst und ausgewertet werden. Außerdem werden mechanische Schwingungen beweglicher Teile des Mähdreschers 10, z.B. vom Verbrennungsmotor 58, von den Kurbelwellen 62 und vom Mehrtrommeldreschwerk über den Strohschüttler 32 auf die Schwingungsaufnehmereinheit 66 übertragen und von dieser hinsichtlich möglicher Schäden ausgewertet. Eine mögliche zweite Anbringungsstelle für die (oder eine zweite) Schwingungsaufnehmereinheit 66' befindet sich am rückwärtigen Ende des Obersiebs der Reinigungseinrichtung 46.

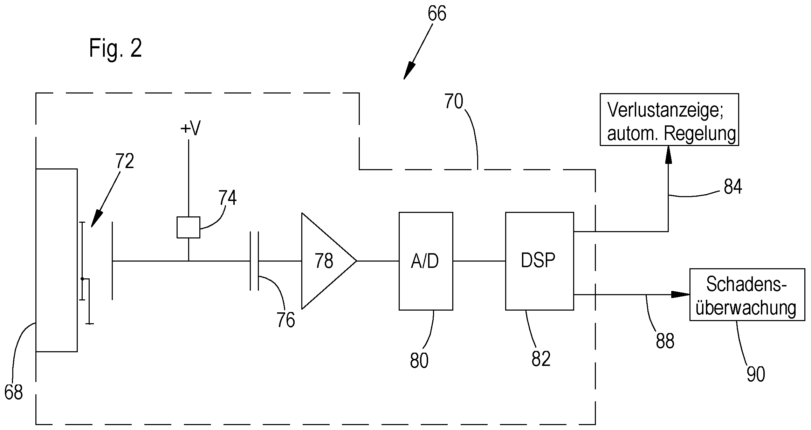

Die Figur 2 zeigt ein elektronisches Schema der Schwingungsaufnehmereinheit 66. Innerhalb eines Gehäuses 70 ist die Prallplatte 68 befestigt, an deren innerer Oberfläche ein Schwingungsaufnehmer 72 befestigt ist. Der Schwingungsaufnehmer 72 ist hier als kapazitiver Schwingungsaufnehmer dargestellt, er könnte jedoch auch piezoelektrisch, induktiv, optisch oder nach einem beliebigen anderen Wirkungsprinzip arbeiten. Eine Platte des Schwingungsaufnehmers 72 ist über eine Koppelschaltung mit einem Widerstand 74 mit einer Spannungsquelle und über einen Kondensator 76 mit dem Eingang eines Verstärkers 78 verbunden, während die andere, an der Prallplatte 68 angebrachte Platte des Schwingungsaufnehmers 72 geerdet ist. Der dargestellte, kapazitive Schwingungsaufnehmer 72 kann insbesondere als MEMS-Element hergestellt sein, vgl. die Offenbarung der 10 2011 007 843 A1.
Der Ausgang des Verstärkers 78 ist mit dem Eingang eines Digital-Analog-Wandlers 80 verbunden, dessen Ausgang wiederum mit dem Eingang eines als Signalverarbeitungsschaltung dienenden, digitalen Signalprozessors 82 gekoppelt ist. Der digitale Signalprozessor 82 hat einen ersten Ausgang 84, der mit einer Verlustanzeige und/oder automatischen Regelung 86 zur Vorgabe der Vortriebsgeschwindigkeit des Mähdreschers 10 und/oder selbsttätigen Einstellung von Arbeitsparametern des Mehrtrommeldreschwerks, z.B. der Drehzahl und des Dresch- und/oder Trennspalts, verbunden ist.
Außerdem hat der digitale Signalprozessor 82 einen zweiten Ausgang 88, der mit einer Einrichtung zur Schadensüberwachung 90 verbunden ist. Der erste und zweite Ausgang müssen nicht elektrisch voneinander getrennt sein, sondern könnten durch eine gemeinsam genutzte, serielle oder parallele Schnittstelle realisiert werden. In diesem Fall sind in der Schnittstelle beide Ausgänge 84, 88 vereint und durch das von der Schnittstelle verwendete Protokoll unterscheidbar.
Im Betrieb untersucht der digitale Signalprozessor die vom Schwingungsaufnehmer 72 erfassten Vibrationen auf Schwingungsanteile, die von Verlustkörnern stammen. Dazu kann insbesondere eine Fourier-Analyse der Signale des Schwingungsaufnehmers 72 durchgeführt werden und im Fall, dass eine für ein aufprallendes Verlustkorn charakteristisches Frequenzkomponente im Spektrum enthalten ist, wird ein entsprechendes Signal (Impuls) an den ersten Ausgang 84 abgegeben. Es kann auch die Menge bzw. Anzahl der in einer Zeiteinheit (von z.B. 1 s) erfassten, auf Körner zurückgehenden Schwingungen gezählt und dem Ausgang 84 zugeführt werden.
Das erwähnte Spektrum wird zusätzlich auf Vibrationen hin untersucht, die auf ein möglicherweise schadhaftes Bauteil des Mähdreschers 10 zurückgehen. Hierzu sei auf die Offenbarung der DE 101 005 22 A1 verwiesen. So bewegt sich der Strohschüttler 32 mit einer charakteristischen Frequenz, die im Bereich von einigen Hz liegt. Falls die Amplitude dieser Schwingung höher als üblich ist, kann daher ein loses Teil des Strohschüttlers oder ein Fehler in einem Lager der Kurbelwelle 62 vorliegen. In diesem Fall wird eine entsprechende Ausgabe an den zweiten Ausgang 90 übersandt.
Die beiden erwähnten Untersuchungen des Spektrums hinsichtlich nachgewiesener Verlustkörner (Ausgang 84) und schadhafter Bauteile (Ausgang 88) finden quasi gleichzeitig statt, denn der digitale Signalprozessor 82 arbeitet diese Vorgänge in Realität sequentiell ab. Bei entsprechender Parallel-Architektur des digitalen Signalprozessors 82 können die genannten Untersuchungen jedoch auch parallel erfolgen.

## Patentansprüche

1. Mähdrescher (10) mit Vorrichtungen zum Fördern, Dreschen, Abscheiden und Reinigen von Erntegut sowie einer der Erntegutresteabgabeseite der Vorrichtung zum Abscheiden oder Reinigen zugeordneten Schwingungsaufnehmereinheit (66) mit einem Schwingungsaufnehmer (72) und einer mit dem Schwingungsaufnehmer (72) signalübertragend verbundenen, elektronischen Signalverarbeitungsschaltung, die konfiguriert ist, aus den Signalen des Schwingungsaufnehmers (72) Informationen hinsichtlich der Menge von durch den Schwingungsaufnehmer (72) erfassten Verlustkörnern abzuleiten und als ersten Ausgangswert zur weiteren Verarbeitung und/oder Anzeige abzugeben, **dadurch gekennzeichnet, dass** der Schwingungsaufnehmer (72) über eine Halterung (64) schwingungsleitend mit bewegten, zu überwachenden Teilen gekoppelt ist und dass die Signalverarbeitungsschaltung (72) konfiguriert ist, die Signale des Schwingungsaufnehmers (72) zusätzlich auf Vibrationen, die auf mögliche Schäden an den bewegten Teilen hinweisen, zu untersuchen und das Ergebnis als zweiten Ausgangswert zur weiteren Verarbeitung und/oder Anzeige abzugeben.

2. Mähdrescher (10) nach Anspruch 1, wobei der Schwingungsaufnehmer (72) und die Signalverarbeitungsschaltung in einem gemeinsamen Gehäuse (70) angeordnet sind.

3. Mähdrescher (10) nach Anspruch 1 oder 2, wobei der Schwingungsaufnehmer (72) schwingungsleitend mit einer Prallplatte (68) oder einem Prallstab verbunden ist, die oder der in einen Verlustkörner enthaltenden Gutfluss einfügbar ist.

4. Mähdrescher (10) nach einem der Ansprüche 1 bis 3, wobei die Signalverarbeitungsschaltung einen digitalen Signalprozessor (82) enthält, der den ersten und zweiten Ausgangswert jeweils zeitgleich oder sequentiell nacheinander erzeugt.

## Claims

1. Combine harvester (10) with devices for conveying, threshing, separating and cleaning crop, and with a vibration pick-up unit (66) which is assigned to the crop-residue-dispensing side of the separating or cleaning device and has a vibration pick-up (72) and an electronic signal processing circuit which is connected in a signal-transmitting manner to the vibration pick-up (72) and is configured so as, from the signals of the vibration pick-up (72), to deduce information with respect to the quantity of lost grains detected by the vibration pick-up (72) and to output the information as a first output value for further processing and/or display, **characterized in that** the vibration pick-up (72) is coupled via a holder (64) in a vibration-conducting manner to moving parts which are to be monitored, and **in that** the signal processing circuit (72) is configured to additionally investigate the signals of the vibration pick-up (72) for vibrations, which indicate possible damage to the moving parts, and to output the result as a second output value for further processing and/or display.

2. Combine harvester (10) according to Claim 1, wherein the vibration pick-up (72) and the signal processing circuit are arranged in a common housing (70).

3. Combine harvester (10) according to Claim 1 or 2, wherein the vibration pick-up (72) is connected in a vibration-conducting manner to an impact plate (68) or to an impact rod, which impact plate or which impact rod can be fitted into a material flow containing lost grains.

4. Combine harvester (10) according to one of Claims 1 to 3, wherein the signal processing circuit contains a digital signal processor (82) which generates the first and second output values in each case isochronously or sequentially one after the other.

## Revendications

1. Moissonneuse (10) comportant des dispositifs destinés à faire avancer, battre, séparer et nettoyer des produits de récolte ainsi qu'une unité d'acquisition d'oscillations (66) associée au côté de sortie restant des produits de récolte du dispositif à des fins de découpage ou de nettoyage, comportant un dispositif d'acquisition d'oscillations (72) et un circuit de traitement du signal électronique connecté de manière à transmettre les signaux au dispositif d'acquisition d'oscillations (72), qui est configuré pour déduire, à partir des signaux du dispositif d'acquisition d'oscillations (72), des informations concernant la quantité de graines perdues détectées par le dispositif d'acquisition d'oscillations (72) et pour les fournir en sortie en tant que première valeur initiale à des fins de traitement et/ou d'affichage supplémentaires, **caractérisée en ce que** le dispositif d'acquisition d'oscillations (72) est couplé par l'intermédiaire d'un dispositif de maintien (64) de manière à transmettre les oscillations à des parties mobiles devant être surveillées, et **en ce que** le circuit de traitement du signal (72) est configuré pour analyser en outre les signaux du dispositif d'acquisition d'oscillations (72) en ce qui concerne des vibrations qui indiquent d'éventuels endommagements des pièces mobiles, et pour délivrer le résultat sous la forme d'une seconde valeur initiale à des fins de traitement et/ou d'affichage supplémentaires.

2. Moissonneuse (10) selon la revendication 1, dans laquelle le dispositif d'acquisition d'oscillations (72) et le circuit de traitement du signal sont disposés dans un boîtier commun (70).

3. Moissonneuse (10) selon la revendication 1 ou 2, dans laquelle le dispositif d'acquisition d'oscillations (72) est relié de manière à transmettre les oscillations à une plaque de déflexion (68) ou à une tige de déflexion, qui peut être introduite dans un flux de produit contenant des graines perdues.

4. Moissonneuse (10) selon l'une quelconque des revendications 1 à 3, dans laquelle le circuit de traitement du signal comporte un processeur numérique de signal (82) qui génère respectivement simultanément ou séquentiellement les première et seconde valeurs initiales.
